# EUROPEAN PATENT SPECIFICATION

(11) **EP 4 204 344 B1**
(45) Date of publication and mention of the grant of the patent: **25.11.2026**
(21) Application number: 21769405.8
(22) Date of filing: 26.08.2021
(51) Int. Cl.: B65G 61/00, B65G 59/02, H01M 10/06, H01M 10/04

(54) **STACK MANIPULATING SYSTEM AND CORRESPONDING METHOD**
STAPELMANIPULATIONSSYSTEM UND ENTSPRECHENDES VERFAHREN
SYSTÈME DE MANIPULATION D'EMPILEMENT ET PROCÉDÉ CORRESPONDANT

(30) Priority: 28.08.2020 EP 20193453
(43) Date of publication of application: 05.07.2023
(73) Proprietor: G.J. Hollestelle Beheer B.V., 1721 BN Broek op Langedijk (NL)
(72) Inventor: HOLLESTELLE, Gerard Jan, 1721 BN Broek op Langedijk (NL)
(74) Representative: EP&C
(86) International application number: PCT/EP2021/073659
(87) International publication number: WO 2022/043462

(56) References cited:
- EP-A1- 3 624 245
- CN-A- 110 371 695
- CN-A- 110 980 286
- CN-U- 205 122 722
- US-A1- 2018 366 766

## Description

### FIELD OF THE INVENTION

The invention relates to the field of battery production and in particular to the field of lead-acid battery production.

### BACKGROUND OF THE INVENTION

In the field of lead-acid battery production, the lead plates undergo a specific heat treatment and are subsequently placed in a battery housing. A dedicated machine, also referred to as a sandwich machine is used for the placing of the lead plates in the housing. Two types of plates are required for each battery, positive and negative plates. They are positioned in the housing in an alternating configuration, wherein each positive plate is sandwiched between two negative plates and vice versa. The dedicated machine receives a stack of positive plates and a stack of negative plates and rearranges a number of positive and negative plates into the "sandwich-configuration" prior to placement in the housing. The production process is typically a high volume process, i.e. a large number of lead plates are installed in their respective housings each single day.

The placement of the lead plates in this dedicated machine occurs manually. This job is physically quite demanding, because the individual lead plates are quite heavy. Moreover, the lead plates are typically not handled individually, but are placed in the machine in stacks comprising multiple plates. Two types of stacks are placed in the machine, stacks with positive plates and stacks with negative plates.

A problem associated with the manual placement of the stack of lead plates is the physical stress it exerts on a human operator, who has to literally move tons of lead plates each day. Despite the fact that the job of placing the stack of lead plates in the dedicated machine is physically demanding, to the best of the applicant's knowledge to date no device exists that can mechanically perform the placing of the stack of plates in the dedicated machine, thereby obviating the heavy manual labour.

The movement of objects by machines on itself is known. US2009/002868A1 discloses a device that is configured to move objects from an arrival station onto a track of rollers. An object is lifted upwards by a plurality of pins, after which a robot arm with a gripper grips the object and places it on the track of rollers.

Several factors play a role in the moving of the stacks of lead plates to the dedicated machine and the placing of the stacks of lead plates onto the dedicated machine. First, for various reasons it is generally required that an operator monitors and accesses the dedicated machine (the sandwich machine) quite regularly. For this reason, the operator generally needs to be in the vicinity of the dedicated machine constantly or at least during a significant portion of the operating time. The operator may need to move completely around the machine or at least be able to access most parts of the machine, including the platforms (or target locations) on which the two types of stacks are placed. If a stack of lead plates or an individual plate from a stack would fall on an operator, significant harm or worse may occur. Therefore, safety and reliability is a concern. A safety cage or at least some kind of protection which protects the operator against dropping plates may be required.

The required presence of the human operator for monitoring purposes may also play a role in the lack of progress in reducing the heavy manual labour. The fact that he needs to be there anyway may be a reason to let him do the work of moving the heavy plates as well.

Furthermore, the movement of the stack of plates itself may not be straightforward, because the plates may arrive in a vertical stack with the individual plates in the stack having a horizontal orientation. The dedicated machine may require that the plates are positioned on the platforms of the dedicated machine on edge, i.e. the stack is horizontal and the individual plates are oriented vertically. Hence, a reorientation of the stack of lead plates may be required.

Sometimes, some of the plates in a stack are stuck to one another. This can result in problems in the dedicated machine which rearranges the plates into a sandwich configuration because it cannot process a plate if it is stuck to another plate. Therefore, sometimes the plates need to be loosened from each other before being placed in the dedicated machine.

EP3624245A1 discloses a battery plate separator that makes use of a robot arm to pick up the plates from a pallet and move them to a separator apparatus. Here, the plates that might be sticking together can be separated before being moved to a further station.

US 2018/366766 A1 discloses a system with the features of the preamble of claim 1 and also discloses a method for manipulating a stack of plates configured to move a stack of plates, in particular lead battery plates, from at least one arrival location to at least one target location at a machine, and wherein the stack manipulating system comprises:
- a first zone comprising the at least one arrival location and a moving assembly and a complete range of motion of the moving assembly,
- a second zone comprising the at least one target location and the machine,
- at least one conveyor, wherein the at least one conveyor comprising an entrance in at least one intermediate location and an exit located at the at least one target location, wherein the intermediate location is located in the first zone,wherein the conveyor defines a trajectory between the entrance and the exit,the method comprising the steps:

a) engaging the stack of plates with the moving assembly in the at least one arrival location in the first zone,
b) moving the stack of plates from the at least one arrival location to the at least one intermediate location in the first zone with the moving assembly,
c) moving the stack of plates from the at least one intermediate location to the at least one target location in the second zone with the at least one conveyor,wherein the moving assembly comprises moving parts.

Because the robot arm may move around freely between the stack and the machine, it can be dangerous for an operator to be in the vicinity of the robot arm while it is operational.

It appears that this total set of factors has been the cause that to date no significant progress in this field has been made. Further factors and challenges may exist as well.

### OBJECT OF THE INVENTION

It is an object of the invention to provide a system that can safely and reliably move plates from one location to another location while an operator is nearby. It is a further object of the invention to provide a corresponding method.

It is a further object of the present invention to provide a system which can safely and reliably move a stack of lead plates from an arrival location to and onto a dedicated machine which is configured for placing the lead plates in the battery housing.

### SUMMARY OF THE INVENTION

In a first aspect, the invention relates to a stack manipulating system configured to move a stack of plates from at least one arrival location to at least one target location at a machine where the plates are to be processed, and wherein the stack manipulating system comprises:
- a first zone comprising the at least one arrival location and a non-static moving assembly having a range of motion, wherein the complete range of motion is located within the first zone, wherein an operator may not be in the first zone when the moving assembly is in an operational state,
- a second zone comprising the at least one target location and the machine, wherein the second zone is configured to safely accommodate the operator,
- a separation, separating the second zone from the first zone,
- at least one conveyor traversing the separation, the at least one conveyor comprising an entrance in at least one intermediate location and an exit located in the second zone, wherein the at least one intermediate location is located in the first zone,
wherein the conveyor defines a trajectory between the entrance and the exit and comprises a guide structure which extends between the entrance and the exit along said trajectory and which guides the stack of plates along said trajectory, and wherein, at least in the second zone, the guide structure is a static structure, wherein the moving assembly comprises moving parts, and wherein the moving parts are configured to stay outside the second zone.

In doing so, an operator can safely access the machine that is located in the second zone, without being at risk of unexpectedly encountering any moving parts: the range of motion of the moving assembly is located in the first zone and the guide structure is located in the second zone and is static.

This also enables the continuous operation of the machine. If only a non-static moving assembly, e.g. a robot arm, were present to move a stack of plates between the arrival location and the target location, the non-static moving assembly should have to be shut off each time an operator must access the machine. With the system according to the invention, this is not necessary. The operator may safely access the second zone while the system is in an operational state.

In an embodiment, the moving assembly may comprise a moveable manipulator, wherein the moveable manipulator comprises an engagement member which is configured to engage the stack of plates in the at least one arrival location. The moving assembly may be configured to move the stack of plates from the at least one arrival location to the at least one intermediate location.

Such a moveable manipulator can engage the stack of plates in multiple orientations. It can engage the stack of plates from above or from below, but also from the side. In doing so, it is not a necessity that the stacks of plates always arrive in a specific orientation.

In an embodiment, the moving assembly does not comprise a guide structure which extends between the arrival location and the intermediate location.

The at least one intermediate location may be located at a first vertical distance from the at least one arrival location and at a second vertical distance from the at least one target location. The moving assembly can then be configured to move a stack of plates over the first vertical distance to the at least one intermediate location, and the at least one conveyor can be configured to move the stack of plates over the second vertical distance to the at least one target location. In such an embodiment, the moving assembly and the at least one conveyor work together to move the stack of plates past the separation and towards the machine. This way, a separation may be used to create a safe zone for an operator accessing the machine while the stacks of plates can still be transported from an arrival location to the machine.

In an embodiment, the stack manipulation system comprises at least one plate loosening device. A plate loosening device being configured to loosen plates of a stack of plates that are stuck together, particularly as a result of a heat treatment, wherein the at least one plate loosening device comprises :
- a bottom wall configured to support a stack of plates,
- at least one guide body, wherein the guide body is moveably connected to the bottom wall, and being configured to abut against the stack of plates,
- a guide body drive system being connected to the at least one guide body and comprising at least one actuator configured to move the at least one guide body,
wherein the guide body drive system is configured to move the at least one guide body to pivot the stack of plates over an angle with respect to a neutral position, wherein the movement of the at least one guide body pivots the plates of the stack of plates, shearing the plates with respect to each other, wherein the plate loosening device is located at the entrance or at the exit of the at least one conveyor.

In a plate loosening device, the plates of the stack of plates may be oriented on edge. Such a plate loosening device can be useful because the coating of lead plates used in the production of lead-acid batteries can cause the plates to stick together. Loosening plates from one another before entering the machine prevents the machine from jamming and prevents multiple adjacent positive or negative plates being located next to each other.

The plate loosening device may comprise a wall and the actuator and guide body may accelerate and/or decelerate the stack of plates against the wall. In particular, the actuator and the guide body are configured to separate the plates of a stack by letting the stack fall freely on the wall. Herein, the height from which the plates fall is limited to a height small enough not to cause damage to the plates, but large enough to separate the plates. For example, the height may be less than 20 cm, in particular less than 10 cm, more in particular less than 3 cm.

In one embodiment, the moving assembly comprises a robot arm and the conveyor does not comprise a robot arm. By using a conveyor that is not a robot arm, the second zone may be a zone where it is safe for an operator to move around freely.

In an embodiment, the moving assembly comprises a crane.

The plate loosening device may be located at the entrance or at the exit of the at least one conveyor.

In an embodiment, the guide structure of the conveyor may comprise one or more tracks or a conveyor belt.

In an embodiment, the moving assembly does not comprise a track or conveyor belt,

In an embodiment, the moving assembly and/or the conveyor may comprise at least one rotational manipulator which provides at least one rotary degree of freedom for the stack of plates. The at least one rotational manipulator can be rotatable to change the orientation of a stack of plates between the arrival location and the target location. This negates a need for the stacks of plates to arrive in a specific orientation; the rotational manipulator can change the orientation the stack of plates has in an arrival location to an orientation desired by the machine.

In a further embodiment, the stack manipulation system further comprises the support body and a stack of plates. The support body may define a plurality of longitudinal and/or lateral slots to accommodate the moveable manipulator, allowing the manipulator to reach underneath a stack which is positioned on the body. The width of the slots may be larger than the width of the moveable manipulator. Because the slots can be both longitudinal and lateral, the moveable manipulator can engage a stack of plates from multiple directions.

In an embodiment, the support body comprises at least one recess and the moveable manipulator comprises at least one extending member, wherein the length and width of the at least one recess are larger than the length and width of the at least one extending member. The moveable manipulator is configured to engage the support body at least through the at least one recess to move the support body from an arrival position to a support body storage position.

In an embodiment, the at least one conveyor comprises an elevator and the intermediate location may be located at an upper extremity or at a lower extremity of the guide structure and the target location is located at an opposite extremity of the guide structure. An elevator can be a useful part of the conveyor because the elevator does not comprise moving parts that are accessible to an operator while the stack manipulating system is operational. This increases the safety of the operator.

The elevator may comprise an elevator system to separate the plates of a stack by accelerating and/or decelerating the stack of plates against a fixed structure. In particular, the elevator system is configured to separate the plates of a stack by letting the stack fall freely on a bottom wall. Herein, the height from which the plates fall is limited to a height small enough not to cause damage to the plates, but large enough to separate but plates. For example, the height may be less than one meter, in particular 50 centimetre.

In an embodiment, the at least one conveyor may comprise at least one actuator and at least one intermediate body. The at least one actuator and the at least one intermediate body are configured to move a stack of plates from the at least one intermediate location into the at least one conveyor and/or to move the stack of plates out of the at least one conveyor. In particular, the at least one actuator and the at least one intermediate body may be configured to move the stack of plates into the elevator and/or out of the elevator. The at least one actuator and the at least one intermediate body may also be configured to directly feed a stack of plates into the machine. The use of at least one intermediate body and at least one actuator makes that the stack of plates can be moved from an arrival location to the machine without human interference.

In an embodiment, a continuous mover, such as a walking beam, may move the stack of plates between the moving assembly and the conveyor.

In an embodiment, the separation comprises a protection fence with overhang to accommodate the operator. In such an embodiment, the moving assembly and the conveyor are configured to move the stack of plates over the protection fence. A fence may be an open structure such as a wire fence, but may also be a closed structure, e.g. made with plate material or may be a wall. The latter may also protect an operator against falling particles that are smaller than a stack of plates or robot arm, e.g. dust or coating particles. The use of a fence with overhang creates a zone in the second zone that is safe for the operator, i.e. the operator is safe from moving objects coming from above and from the side.

In an embodiment, the separation comprises a passage and a blocking member that is moveable between a blocking state blocking the passage and non-blocking state allowing an operator to move from the first zone to the second zone when the moving assembly is in an idle state. In particular the blocking member may be a door.

In another embodiment, the separation may comprise a floor of a building, wherein the first zone is located on the floor of the building and the second zone is located on a lower floor of the building.

The separation may comprise a floor of a building, wherein the second zone is located on the floor of the building and the first zone is located on a lower floor of the building.

By placing the arrival location on another floor than the machine, the arrival location may be approached from all directions instead of only from one side. The latter being the case when the arrival location and the machine are on the same floor.

In an embodiment, the stack manipulation system may further comprise a pallet transport assembly. A pallet may support stacks of plates in the at least one arrival position and the pallet transport assembly may comprise a pallet conveyor configured to move pallets to and away from the arrival location.

In an embodiment, the machine is a battery plate arranging device, the battery plate arranging device comprising at least a first target location for a stack of plates of a first kind and a second target location for a stack of plates of a second kind. The battery plate arranging device may comprise a first positioning assembly and a second positioning assembly that alternatively position plates of the first kind and the second kind behind each other, creating a stack of alternating plates of the first kind and plates of the second kind. The machine may also comprise a conveyor configured to move a stack of alternating plates out of the machine after having been arranged to be installed in a battery.

In another aspect, the invention relates to a method for manipulating a stack of plates configured to move a stack of plates from at least one arrival location to at least one target location at a machine, and wherein the stack manipulating system comprises:
- a first zone comprising the at least one arrival location and a moving assembly and a complete range of motion of the moving assembly, wherein an operator may not be in the first zone when the moving assembly is in an operational state,
- a second zone comprising the at least one target location and the machine, wherein the second zone is configured to safely accommodate the operator,
- a separation, separating the first zone from the second zone,
- at least one conveyor extending through or over the separation, the at least one conveyor comprising an entrance in at least one intermediate location and an exit located at the at least one target location, wherein the intermediate location is located in the first zone,

wherein the conveyor defines a trajectory between the entrance and the exit and comprises a guide structure which extends between the entrance and the exit along said trajectory and which guides the stack of plates along said trajectory, and wherein, at least in the second zone, the guide structure is a static structure,
the method comprising the steps:
   a) engaging the stack of plates with the moving assembly in the at least one arrival location in the first zone,
   b) moving the stack of plates from the at least one arrival location to the at least one intermediate location in the first zone with the moving assembly,
   c) moving the stack of plates from the at least one intermediate location to the at least one target location in the second zone with the at least one conveyor,
      wherein the moving assembly comprises moving parts, and wherein the moving parts stay outside the second zone.

In an embodiment, the moving assembly may comprise a moveable manipulator, wherein the moveable manipulator comprises an engagement member which, during step a), engages the stack of plates in the at least one arrival location. Subsequently, during step b), the moving assembly may move the stack of plates from the at least one arrival location to the at least one intermediate location.

In an embodiment, the at least one intermediate location is located at a first vertical distance from the at least one arrival location and a second vertical distance from the at least one target location. During step b) the moving assembly may move a stack of plates over the first vertical distance to the at least one intermediate location, and during step c) the at least one conveyor may move the stack of plates over the second vertical distance to the at least one target location. The moving assembly and the at least one conveyor may work together to move the stack of plates past the separation and towards the machine.

In an embodiment, the stack manipulation system comprises at least one plate loosening device, wherein the plate loosening device loosens the plates of a stack from each other before arriving at the at least one target location in case the plates are stuck to each other. The at least one plate loosening device may comprise :
- a bottom wall configured to support a stack of plates,
- at least one guide body, wherein the guide body is moveably connected to the bottom wall, and being configured to abut against the stack of plates,
- a guide body drive system being connected to the at least one guide body and comprising at least one actuator configured to move the at least one guide body,
wherein the guide body drive system is configured to move the at least one guide body to pivot the stack of plates over an angle with respect to a neutral position, wherein the movement of the at least one guide body pivots the plates of the stack of plates, shearing the plates with respect to each other, wherein the plate loosening device is located at the entrance or at the exit of the at least one conveyor.

In an embodiment, the moving assembly comprises a robot arm and the conveyor does not comprise a robot arm.

In an embodiment, the moving assembly and/or the conveyor may comprise at least one rotational manipulator which provides at least one rotary degree of freedom. The moving assembly and/or the conveyor may change the orientation of a stack of plates after engaging the stack of plates.

In an embodiment, the moving assembly may move a support body from an arrival position to a support body storage position.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figures 1A and 1B depict an embodiment of the invention in two different positions in isometric view.
Figures 2A-2D depict top views and side views of an embodiment of the invention in two different positions.
Figures 3A-3D show different views of an embodiment of the conveyor.
Figures 4A-4L show various positions of various components of an embodiment, depicting a process according to an embodiment.
Figure 5 shows another embodiment of the invention in isometric view.
Figure 6 shows another embodiment of the invention in isometric view.
Figures 7A-7C show an embodiment of a support structure and pallet in isometric view.
Figures 8A and 8B shows two embodiments of a pallet transport assembly in isometric view.

### DETAILED DESCRIPTION OF THE FIGURES

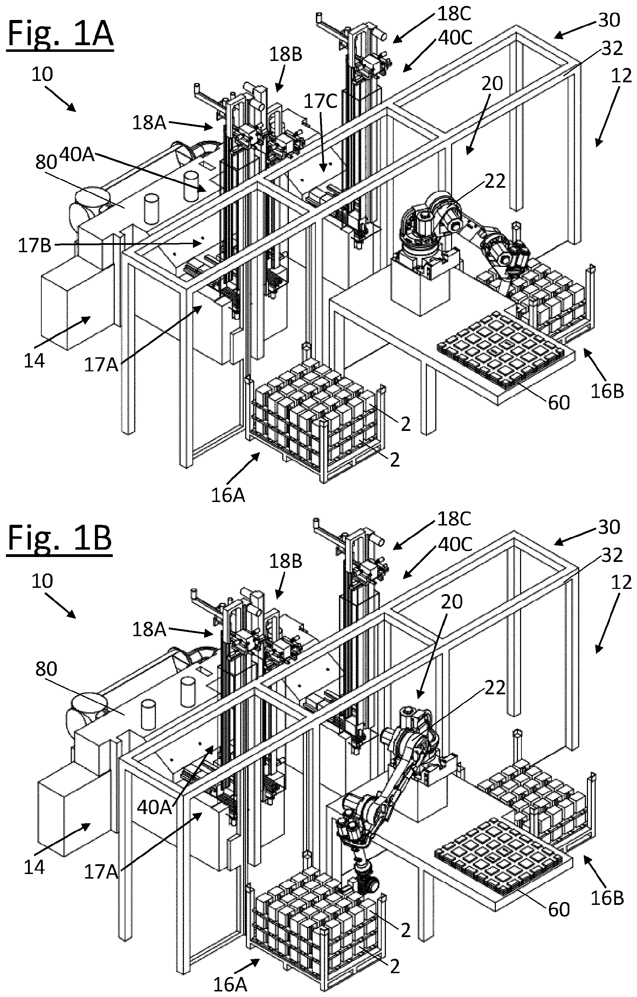

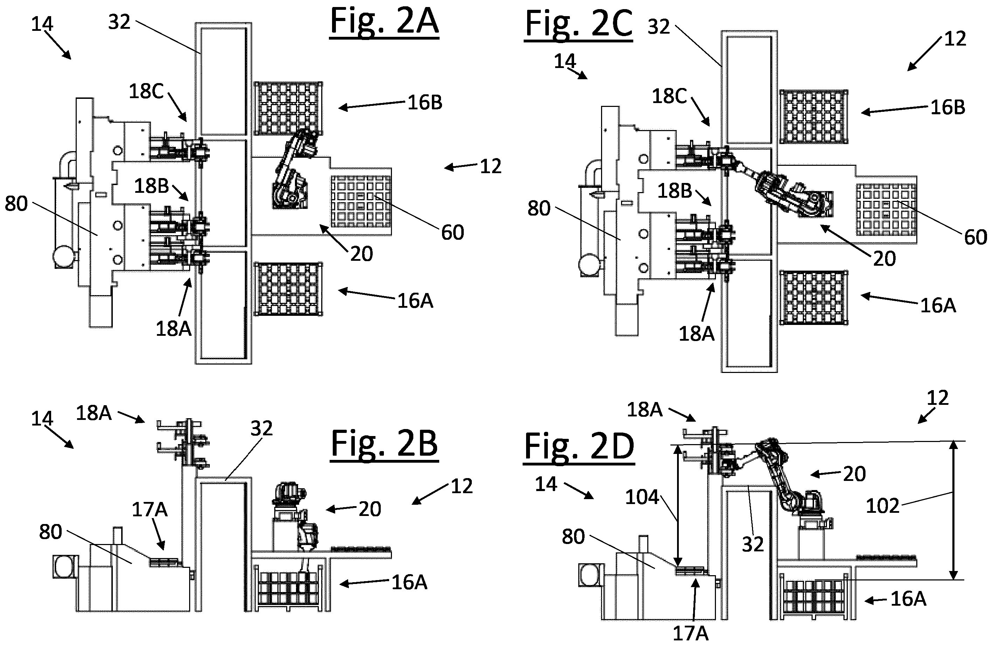

Figures 1A, 1B, 2A, 2B, 2C, and 2D depict different views of an embodiment of a stack manipulating system 10 configured to move a stack of plates 2 from an arrival location 16A, 16B to a target location 17A, 17B, 17C at a machine 80 where the plates of the stack of plates will be processed.

The depicted machine 80 is a so-called sandwich machine that is configured to rearrange stacks of plates 2 into alternating positive and negative plates before feeding the alternating plates into a housing. Two types of plates are required for each battery; positive and negative plates. They are positioned in the housing in an alternating configuration, wherein each positive plate is sandwiched between two negative plates and vice versa. The machine 80 receives a stack of positive plates and a stack of negative plates and rearranges a number of positive and negative plates into the "sandwich-configuration" prior to placement in the housing. A different type of plates must arrive at each target location 17A, 17B, 17C for the machine 80 to be able to create the desired, rearranged sandwiches of plates.

The positive and negative plates also arrive at different arrival locations 16A, 16B. This reduces the complexity of the movement of the moving assembly and reduces the chances of errors occurring due to the placement of one type of plates at the wrong target location 17A, 17B, 17C at the machine 80.

A first zone 12 is shown comprising arrival locations 16A, 16B and a moving assembly 20. In the arrival location 16A, 16B a stack of plates 2 is located on a support body 60. The complete range of motion of the moving assembly 20 is located in the first zone 12. An operator may not be present in the first zone when the moving assembly 20 is in an operational state. In this embodiment, the moving assembly comprises a robot arm 22 comprising multiple rotational manipulators that provide a rotary degree of freedom for the stack of plates.

A second zone 14 is shown comprising target locations 17A, 17B, 17C and the machine 80. An operator is free to safely move around in the second zone, because a separation 30 separates the first zone 12, comprising the moving assembly, from the second zone 14. In the depicted embodiment, the separation 30 comprises a fence with overhang 32, wherein the second zone 14 comprises the area below the overhang. Herein, the fence with overhang 32 is the part between the area below the overhang and the first zone.

The separation may comprise a second fence (not depicted) on the side of the second zone, wherein an operator may move in the area below the overhang between the fence with overhang and the second fence, and wherein the operator may move between the second zone around the machine and the second zone in the area below the overhang. The fence with overhang and the second fence may comprise wire fencing, plate fencing, or a different type of fencing. In the figures, the fence is depicted as see-through. Additionally, the separation 30 may comprise a blockable passage, for example a door. In that way, when the moving assembly is idle, an operator may freely move between the first zone 12 and the second zone 14.

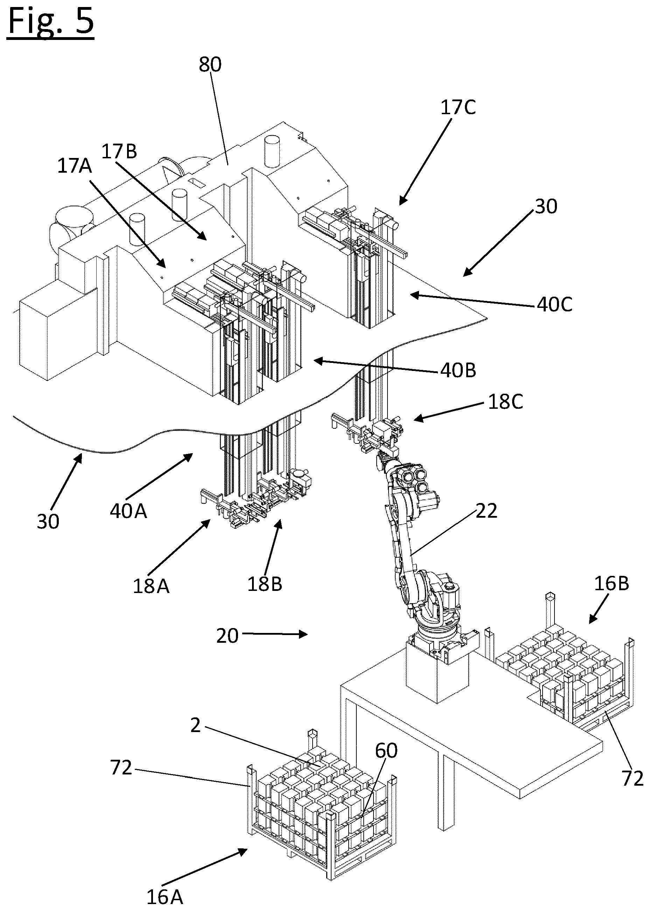

In order for a stack of plates to be moved between an arrival location 16A, 16B and a target location 17A, 17B, 17C, conveyors 40A, 40B (depicted in figure 5), 40C traverse the separation.

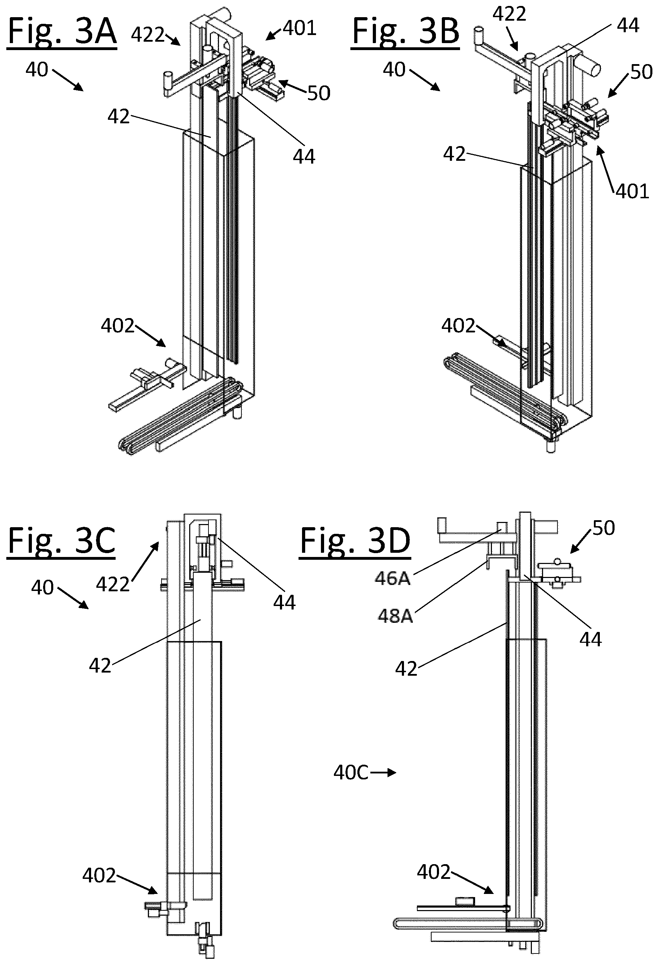

Figures 3A-3D shows the conveyor in greater detail.

Each conveyor (generally denoted by 40, and in particular 40C in figure 3D).comprises an entrance 401 that is located in an intermediate location 18A, 18B, 18C (depicted in Figures 1 and 2) that is located in the first zone 12 and an exit 402 that is located in the second zone 14. The conveyor defines a trajectory between the entrance 401 and the exit 402 and comprises a guide structure 42 which extends between the entrance and the exit along the trajectory. The guide structure 42 guides the stack of plates along said trajectory and is a static structure in the second zone 14. In this embodiment, the conveyor does not comprise a robot arm. In this embodiment, a plate loosening 50 is located at the entrance 401 of the conveyor, it will be understood that the plate loosening device may also be located at the exit 402 of the conveyor.

Referring to figures 2A-2D, in the depicted embodiment, the intermediate location 18C is located at a first vertical distance 102 from the arrival location 16B and at a second vertical distance 104 from the target location 17C. The robot arm 22 is configured to move a stack of plates 2 over the first vertical distance 102 to the intermediate location 18C and the conveyor 40C is configured to move the stack of plates over the second vertical distance to 104 the target location 17C. Herein, the moving assembly and the at least one conveyor work together to move the stack of plates past the separation and towards the machine. This movement is shown in Figure 2A-2D, wherein Figures 2A and 2B show the situation wherein the stack of plates is engaged in the arrival location 16B and Figures 2C and 2D shows the situation wherein the stack of plates has been moved to the intermediate location 18C. Hereafter, the conveyor 40C will move the stack over the second vertical distance 104 towards the machine 80.

To this end, the conveyor 40 comprises an elevator 44. The intermediate location is located at an upper extremity 422 of the guide structure 42 comprising a track and the target location 17A, 17B, 17C is located at an opposite extremity of the guide structure.

To move a stack of plates into the elevator 44 the conveyor 40 comprises an actuator 46A and an intermediate body 48A (shown in Figure 3D). The actuator 46A and the intermediate body 48A are configured to move a stack of plates 2 from the intermediate position 18 into the conveyor.

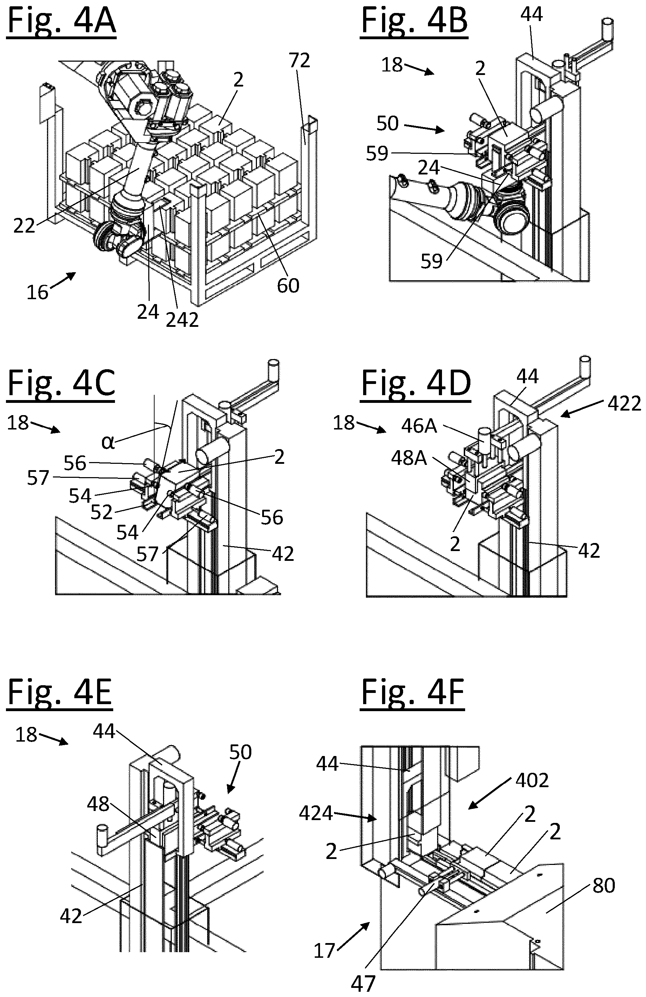

Figures 4A-4L depict the step-by-step process of a stack being manipulated between an arrival location 16A, 16B and a target location 17A, 17B, 17C from different views.

Figure 4A shows a stack of plates 2 located on a support body 60 being engaged by a moveable manipulator 24 of the robot arm 22 of the moving assembly 20. In particular, the stack of plates 2 is being clamped by the extending member 242. The support bodies 60 and the stacks of plates 2 are supported by a pallet 72.

Turning to Figure 4B, the moving assembly has moved the stack of plates 2 to the intermediate location 18. The orientation of the stack of plates 2 has changed and the moveable manipulator 24 is now positioned below the stack of plates. It is noted that the moveable manipulator 24 may also be positioned at different locations with respect to the stack of plates. The stack of plates 2 is being placed in the plate loosening device 50 while the elevator 44 is ready to receive the stack of plates 2. The plate loosening device is depicted in an open state to allow the placement of the stack of plates in the plate loosening device.

Turning to Figure 4C, the plate loosening device 50 is depicted in a closed state, wherein actuators 57 have closed the plate loosening device, engaging the stack of plates 2. In this embodiment, the plate loosening device 50 comprises guide bodies 54 and corresponding actuators 56. While the stack of plates is supported by the bottom wall 52, the actuator 56 drives the guide body 54 and moves the guide body 54 to pivot the stack of plates over an angle α with respect to a neutral position. The movement of the guide bodies 54 pivots the plates of the stack of plates 2, shearing the plates with respect to each other and thereby loosening them. Stopping bodies 59 (depicted in figure 4B) are located near the bottom wall, wherein the stopping bodies restrict the movement of the stack of plates in the plate loosening device when the plate loosening device is in the closed state.

Turning to Figure 4D, an intermediate body 48A and a corresponding actuator 46A have engaged a stack of plates 2 that has been loosened and the intermediate body 48A and actuator 46A are ready to move the stack of plates into the elevator 44. The plate loosening device is shown in the open state.

In Figure 4E, the view has been rotated 180 degrees and the intermediate body 48A and the actuator 46A have moved the stack of plates into the elevator 44.The elevator 44 is located at the upper extremity 422 of the guide structure 42.

Moving to Figure 4F, the view has been rotated clockwise 90 degrees and the exit 402 of the conveyor 40 is shown. The elevator 44 is now located at the lower extremity 424 of the guide structure 42 and the target location 17 is depicted. Here, two stacks of plates 2 are already being fed to the machine 80 and are kept in place by a filler assembly 47.

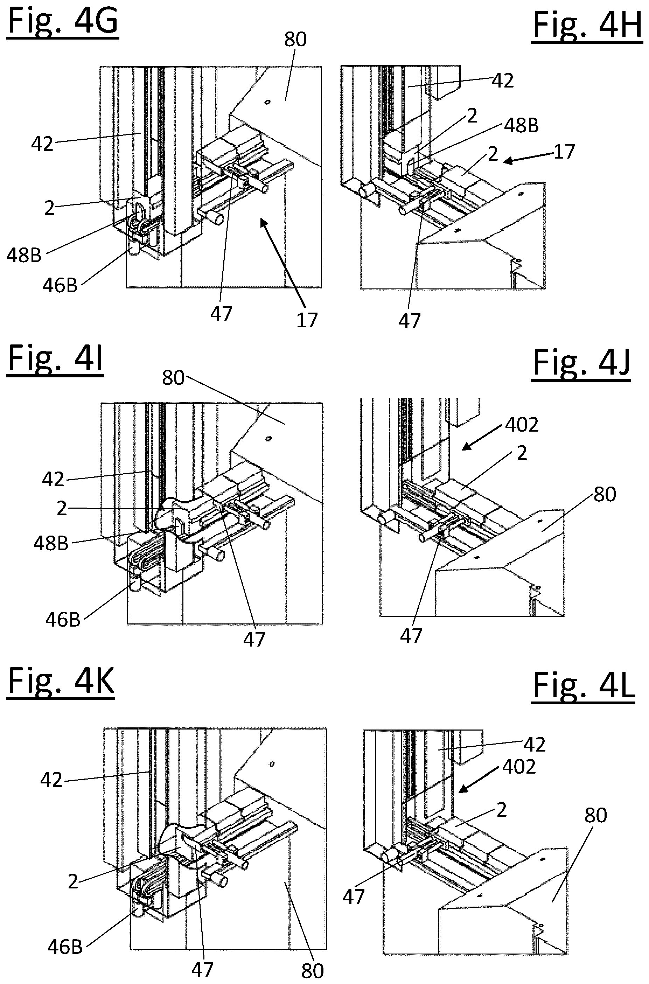

Figure 4G and 4H show the same situation seen from two different views. The stack of plates 2 is still located in the conveyor at the lower extremity of the guide structure 42. A second intermediate body 48B and a second actuator 46B have engaged the stack of plates 2 and are ready to move the stack of plates out of the conveyor.

Figure 4I and 4J show the same situation seen from two different views. The stack of plates has been moved out of the conveyor by the second intermediate body 48B and the second actuator 46B but has not yet been engaged by the filler assembly 47.

Figure 4K and 4L show the same situation seen from two different views. The filler assembly 47 has engaged the stack of plates 2 and can now feed the plates to the machine 80. The plates of the stacks of plates are oriented on edge when being fed to the machine. In figure 4K, part of the conveyor is omitted from the drawings in order to better be able to view the filler assembly 47.

Figure 5 depicts another embodiment of the invention wherein the first zone 12 and the second zone 14 are located on different floors of a building. In the depicted embodiment, the first zone 12 comprises the arrival location 16A, 16B, the moving assembly 20 and its range of motion, the intermediate location 18A, 18B, 18C, and the support bodies 60 supported by the pallet 72. The second zone 14 comprises the machine 80, the target location 17A, 17B, 17C and is located on a floor that is higher than the floor where the first zone is located. In this embodiment the first zone 12 is separated from the second zone 14 by a floor of a building. Herein, the separation 30 comprises the ceiling of the floor where the first zone 12 is located, i.e. the floor where the second zone 14 is located.

By placing the arrival location on another floor than the machine, the arrival location may be approached from all directions instead of only from one side. The latter being the case when the arrival location and the machine are on the same floor.

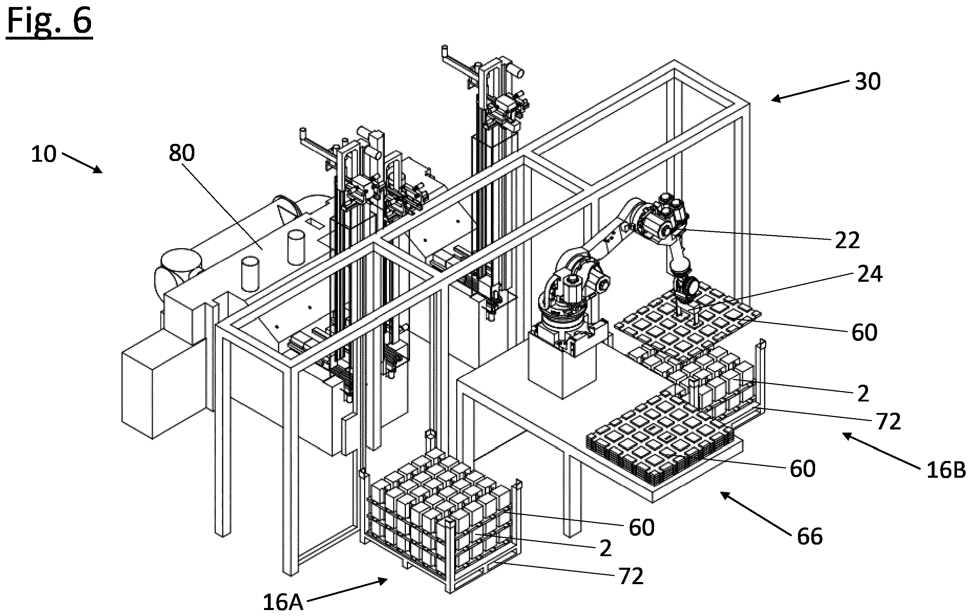

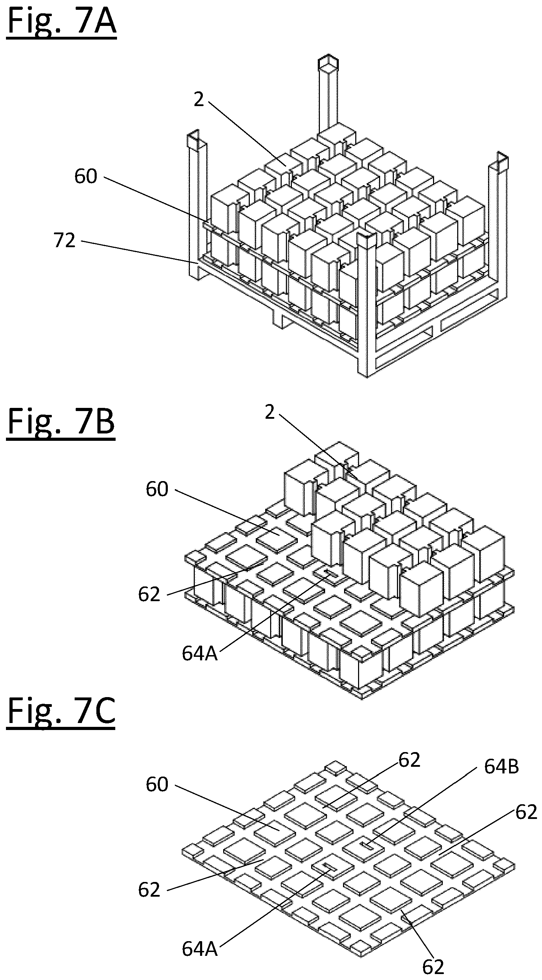

Turning to Figures 6 and 7, the stack manipulation system 10 as a whole is shown and a more detailed view of a pallet 72 with stacks of plates 2 and support bodies 60 is shown.

In this embodiment, the moveable manipulator 24 is configured to engage the support body 60 through a recess 64 to move the support body from an arrival position 16B to a support body storage position 66.

Figures 7A-7C show how the stacks of plates 2 arrives in the arrival location 16A, 16B. A first support body 60 is located on a pallet 72 and multiple stacks of plates 2 are located on said support body 60. On those stacks of plates 2, another support body 60 is located that in turn supports multiple stacks of plates 2. The depicted support body comprises lateral and longitudinal slots 62 that are dimensioned to accommodate the moveable manipulator, and in particular the extending member of the moveable manipulator. Figure 7C shows the support body 60 standing alone and also depicts two recesses 64A, 64B wherein the length and width of the at least one recess are larger than the length and width of the at least one extending member. This way, the extending member can engage the support body 60 in order to move it to the support body storage position. It will be understood that various other ways of engagement are possible such as, but not limited to, a vacuum gripper or a clamping assembly.

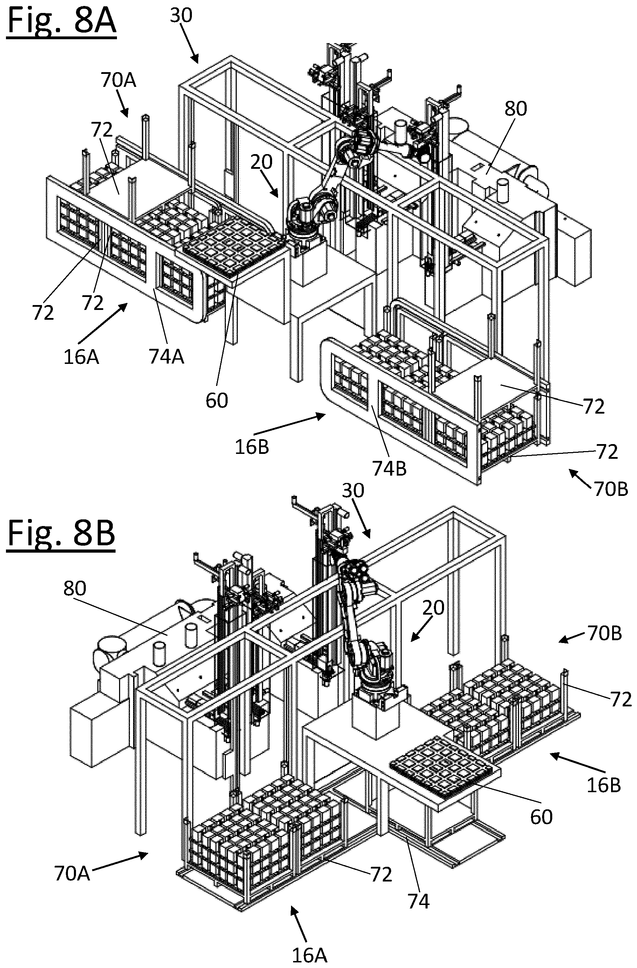

Figure 8A and 8B depict different embodiments of the invention, wherein the stack manipulation system further comprises a pallet transport assembly 70. Figure 8A depicts a pallet transport assembly 70A, 70B where a pallet 72 supports stacks of plates in the arrival position 16A, 16B. The pallet transport assembly 70A, 70B comprises a pallet conveyor 74A, 74B configured to move pallets to and away from the arrival location. The pallets 72 with stacks of plates 2 move towards the arrival location 16A, 16B in the pallet conveyor 74A, 74B and the empty pallets 72 move away from the arrival location 16A, 16B in the opposite direction of their arrival and move over the pallets with stacks of plates.

The embodiment depicted in Figure 8B shows a pallet transport assembly 70 where a pallet 72 supports stacks of plates in the arrival position 16A, 16B. The pallet transport assembly comprises a pallet conveyor 74 configured to move pallets to and away from the arrival location. The pallets 72 with stacks of plates 2 move towards the arrival location 16A, 16B in the pallet conveyor 74 and the empty pallets 72 move away from the arrival location 16A, 16B in a direction orthogonal to the arrival directions.

In an embodiment of the invention, the depicted machine is a battery plate arranging device, the battery plate arranging device comprising at least a first target location 17A for a stack of plates of a first kind and a second target location 17B for a stack of plates of a second kind.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

The mere fact that certain measures are recited in mutually different dependent claims does not indicate that a combination of these measures cannot be used to advantage.

White lines between text paragraphs in the text above indicate that the technical features presented in the paragraph may be considered independent from technical features discussed in a preceding paragraph or in a subsequent paragraph.

## Claims

1. Stack manipulating system (10) configured to move a stack of plates (2), in particular lead battery plates, from at least one arrival location (16A, 16B) to at least one target location (17A, 17B, 17C) at a machine (80) where the plates are to be processed, and wherein the stack manipulating system comprises:
- a first zone (12) comprising the at least one arrival location and a non-static moving assembly (20) having a range of motion, wherein the complete range of motion is located within the first zone,
- a second zone (14) comprising the at least one target location and the machine,
- at least one conveyor (40A, 40B, 40C), wherein
the at least one conveyor comprising an entrance (401) in at least one intermediate location (18A, 18B, 18C) located in the first zone and an exit (402) located in the second zone, wherein
the conveyor defines a trajectory between the entrance and the exit, and wherein
the moving assembly comprises moving parts,
the system being **characterised in that** the second zone is configured to accommodate an operator,
the system comprising a separation (30), separating the second zone from the first zone, the separation being configured for preventing the operator to move into the first zone,
the at least one conveyor traversing the separation,
wherein the conveyor comprises a guide structure (42) which extends between the entrance and the exit along said trajectory and which guides the stack of plates along said trajectory, and wherein, at least in the second zone, the guide structure is a static structure, and wherein the moving parts are configured to stay outside the second zone.

2. Stack manipulation system according to claim 1, wherein the moving assembly (20) comprises a moveable manipulator (24), wherein the moveable manipulator comprises an engagement member which is configured to engage the stack of plates in the at least one arrival location, and wherein the moveable manipulator is configured to move the stack of plates from the at least one arrival location to the at least one intermediate location.

3. Stack manipulation system according to any of the previous claims, wherein the at least one intermediate location is located at a first vertical distance (102) from the at least one arrival location and at a second vertical distance (104) from the at least one target location, wherein the moving assembly is configured to move a stack of plates over the first vertical distance to the at least one intermediate location, and wherein the at least one conveyor is configured to move the stack of plates over the second vertical distance to the at least one target location, wherein the moving assembly and the at least one conveyor work together to move the stack of plates past the separation and towards the machine.

4. Stack manipulation system according to any of the previous claims, comprising at least one plate loosening device (50), configured to loosen the plates of a stack, wherein the at least one plate loosening device comprises:
- a bottom wall (52) configured to support a stack of plates,
- at least one guide body, wherein the guide body is moveably connected to the bottom wall, and being configured to abut against the stack of plates,
- a guide body drive system being connected to the at least one guide body and comprising at least one actuator configured to move the at least one guide body, wherein the guide body drive system is configured to move the at least one guide body to pivot the stack of plates over an angle with respect to a neutral position, wherein the movement of the at least one guide body pivots the plates of the stack of plates, shearing the plates with respect to each other, wherein the plate loosening device is located at the entrance or at the exit of the at least one conveyor.

5. Stack manipulation system according to any of the previous claims, wherein the moving assembly comprises a robot arm (22) and the conveyor does not comprise a robot arm; and/or
wherein the moving assembly comprises a crane; and/or
wherein the guide structure comprises one or more tracks or a conveyor belt; and/or
wherein the moving assembly and/or the conveyor comprises at least one rotational manipulator which provides at least one rotary degree of freedom for the stack of plates, wherein the at least one rotational manipulator is rotatable to change the orientation of a stack of plates between the arrival location and the target location.

6. Stack manipulation system according to any of the previous claims, further comprising a support body (60) and a stack of plates located at the arrival location, wherein the support body defines a plurality of longitudinal and lateral slots (62) in an upper surface to accommodate the moveable manipulator, allowing the manipulator to reach underneath a stack that is positioned on the body, wherein the width of the slots is larger than the width of the moveable manipulator.

7. Stack manipulation system according to any of the previous claims, wherein the support body comprises at least one recess (64) in the upper surface other than the longitudinal and lateral slots and the moveable manipulator comprises at least one extending member (242), wherein the length and width of the at least one recess are larger than the length and width of the at least one extending member, wherein the moveable manipulator is configured to engage the support body at least through the at least one recess to move the support body from an arrival position to a support body storage position (66).

8. Stack manipulation system according to any of the previous claims, wherein the at least one conveyor comprises an elevator (44) and the intermediate location is located at an upper extremity (422) or at a lower extremity (424) of the guide structure and the target location is located at an opposite extremity of the guide structure, wherein the elevator travels along the guide structure.

9. Stack manipulation system according to any of the previous claims, wherein the elevator is driven by an elevator system to separate the plates of a stack by accelerating and/or decelerating the stack of plates against a fixed structure, in particular the elevator system being configured to separate the plates of a stack by letting the stack fall freely on a bottom wall.

10. Stack manipulation system according to any of the previous claims, wherein the at least one conveyor comprises at least one actuator (46) and at least one intermediate body (48), wherein the at least one actuator and the at least one intermediate body are configured to move a stack of plates from the at least one intermediate location into the at least one conveyor and/or to move the stack of plates out of the at least one conveyor.

11. Stack manipulation system according to any of the previous claims, wherein the separation comprises a protection fence with overhang (32), wherein the protection fence with overhang creates an area below the overhang in the second zone to accommodate the operator, wherein the moving assembly and the conveyor are configured to move the stack of plates over the protection fence.

12. Stack manipulation system according to any of the previous claims, wherein the separation comprises a floor of a building, wherein the first zone is located on the floor of the building and the second zone is located on a lower floor of the building, or wherein the separation comprises a floor of a building, wherein the second zone is located on the floor of the building and the first zone is located on a lower floor of the building.

13. Stack manipulation system according to any of the previous claims, wherein the machine is a battery plate arranging device, the battery plate arranging device comprising at least a first target location for a stack of battery plates of a first kind and a second target location for a stack of battery plates of a second kind, wherein the battery plate arranging device comprises a first positioning assembly and a second positioning assembly that alternatively position battery plates of the first kind and the second kind behind each other, creating a stack of alternating battery plates of the first kind and plates of the second kind, wherein the machine comprises a conveyor configured to move a stack of alternating battery plates out of the machine after having been arranged to be installed in a battery.

14. Method for manipulating a stack of plates (2) configured to move a stack of plates, in particular lead battery plates, from at least one arrival location (16A, 16B) to at least one target location (17A, 17B, 17C) at a machine, and wherein the stack manipulating system comprises:
- a first zone (12) comprising the at least one arrival location and a moving assembly (20) and a complete range of motion of the moving assembly,
- a second zone (14) comprising the at least one target location and the machine, wherein the second zone is configured to accommodate an operator,
- a separation (30), separating the first zone from the second zone, the separation being configured for preventing the operator to move into the first zone,
- at least one conveyor (40A, 40B, 40C) extending through or over the separation, the at least one conveyor comprising an entrance (401) in at least one intermediate location (18A, 18B, 18C) and an exit (402) located at the at least one target location,
wherein the intermediate location is located in the first zone, wherein the conveyor defines a trajectory between the entrance and the exit and comprises a guide structure which extends between the entrance and the exit along said trajectory and which guides the stack of plates along said trajectory, and wherein, at least in the second zone, the guide structure is a static structure,
the method comprising the steps:
a) engaging the stack of plates with the moving assembly in the at least one arrival location in the first zone,
b) moving the stack of plates from the at least one arrival location to the at least one intermediate location in the first zone with the moving assembly,
c) moving the stack of plates from the at least one intermediate location to the at least one target location in the second zone with the at least one conveyor,
wherein the moving assembly comprises moving parts, and wherein the moving parts stay outside the second zone.

15. Method for manipulating a stack of plates according to the previous claim, wherein the moving assembly comprises a moveable manipulator (24), wherein the moveable manipulator comprises an engagement member which, during step a), engages the stack of plates in the at least one arrival location, and wherein, during step b), the moving assembly moves the stack of plates from the at least one arrival location to the at least one intermediate location.

16. Method for manipulating a stack of plates according to claims 14 or 15, wherein the at least one intermediate location is located at a first vertical distance from the at least one arrival location and a second vertical distance from the at least one target location, wherein during step b) the moving assembly moves a stack of plates over the first vertical distance to the at least one intermediate location, and wherein during step c) the at least one conveyor moves the stack of plates over the second vertical distance to the at least one target location, wherein the moving assembly and the at least one conveyor work together to move the stack of plates past the separation and towards the machine.

17. Method for manipulating a stack of plates according to any of claims 14 to 16, wherein the stack manipulation system comprises at least one plate loosening device, wherein the plate loosening device loosens the plates of a stack from each other before arriving at the at least one target location, wherein the at least one plate loosening device comprises a guide body drive system and at least one guide body.

18. Method for manipulating a stack of plates according to any of claims 14 to 17, wherein
the moving assembly comprises a robot arm and the conveyor does not comprise a robot arm; and/or
wherein the moving assembly and/or the conveyor comprises at least one rotational manipulator which provides at least one rotary degree of freedom, wherein the moving assembly and/or the conveyor changes the orientation of a stack of plates after engaging the stack of plates; and/or
wherein the at least one conveyor comprises an elevator and the intermediate location is located at a lower extremity of the guide structure and the target location is located at an upper extremity of the guide structure; and/or
wherein the separation is an elongated structure creating a safe side in the second zone which is configured to accommodate an operator and to keep the operator safe from moving parts, the safe side corresponding to the second zone; and/or
wherein the machine is a battery plate arranging device, the battery plate arranging device comprising at least a first target location for a stack of plates of a first kind and a second target location for a stack of plates of a second kind, wherein the battery plate arranging device comprises a first positioning assembly and a second positioning assembly that alternately position plates of the first kind and the second kind behind each other, creating a stack of alternating plates of the first kind and plates of the second kind, wherein the machine comprises a conveyor that moves the stack of alternating plates out of the machine after having been arranged to be installed in a battery.

## Patentansprüche

1. Stapelmanipulationssystem (10), das dazu ausgelegt ist, einen Stapel von Platten (2), insbesondere Bleibatterieplatten, von mindestens einem Ankunftsort (16A, 16B) zu mindestens einem Zielort (17A, 17B, 17C) an einer Maschine (80) zu bewegen, an der die Platten verarbeitet werden sollen, und wobei das Stapelmanipulationssystem Folgendes umfasst:
- eine erste Zone (12), die den mindestens einen Ankunftsort und eine nichtstatische sich bewegende Anordnung (20) mit einem Bewegungsbereich umfasst, wobei sich der gesamte Bewegungsbereich innerhalb der ersten Zone befindet,
- eine zweite Zone (14), die den mindestens einen Zielort und die Maschine umfasst,
- mindestens einen Förderer (40A, 40B, 40C), wobei der mindestens eine Förderer einen Eingang (401) an mindestens einem Zwischenort (18A, 18B, 18C), der sich in der ersten Zone befindet, und einen Ausgang (402), der sich in der zweiten Zone befindet, umfasst, wobei der Förderer eine Trajektorie zwischen dem Eingang und dem Ausgang definiert, und wobei die sich bewegende Anordnung sich bewegende Teile umfasst,
das System **dadurch gekennzeichnet ist, dass** die zweite Zone dazu ausgelegt ist, einen Bediener aufzunehmen,
das System eine Trennung (30) umfasst, die die zweite Zone von der ersten Zone trennt, wobei die Trennung dazu ausgelegt ist, den Bediener daran zu hindern, sich in die erste Zone zu bewegen,
der mindestens eine Förderer die Trennung durchquert,
wobei der Förderer eine Führungsstruktur (42) umfasst, die sich zwischen dem Eingang und dem Ausgang entlang der Trajektorie erstreckt und die den Stapel von Platten entlang der Trajektorie führt, und wobei die Führungsstruktur zumindest in der zweiten Zone eine statische Struktur ist, und wobei die sich bewegenden Teile dazu ausgelegt sind, außerhalb der zweiten Zone zu bleiben.

2. Stapelmanipulationssystem nach Anspruch 1, wobei die sich bewegende Anordnung (20) einen bewegbaren Manipulator (24) umfasst, wobei der bewegbare Manipulator ein Eingriffselement umfasst, das dazu ausgelegt ist, mit dem Stapel von Platten an dem mindestens einen Ankunftsort in Eingriff zu kommen, und wobei der bewegbare Manipulator dazu ausgelegt ist, den Stapel von Platten von dem mindestens einen Ankunftsort zu dem mindestens einen Zwischenort zu bewegen.

3. Stapelmanipulationssystem nach einem der vorhergehenden Ansprüche, wobei sich der mindestens eine Zwischenort in einem ersten vertikalen Abstand (102) von dem mindestens einen Ankunftsort und in einem zweiten vertikalen Abstand (104) von dem mindestens einen Zielort befindet, wobei die sich bewegende Anordnung dazu ausgelegt ist, einen Stapel von Platten über den ersten vertikalen Abstand zu dem mindestens einen Zwischenort zu bewegen, und wobei der mindestens eine Förderer dazu ausgelegt ist, den Stapel von Platten über den zweiten vertikalen Abstand zu dem mindestens einen Zielort zu bewegen, wobei die sich bewegende Anordnung und der mindestens eine Förderer zusammenarbeiten, um den Stapel von Platten an der Trennung vorbei und in Richtung zur Maschine hin zu bewegen.

4. Stapelmanipulationssystem nach einem der vorhergehenden Ansprüche, das mindestens eine Plattenlockerungsvorrichtung (50) umfasst, die dazu ausgelegt ist, die Platten eines Stapels zu lockern, wobei die mindestens eine Plattenlockerungsvorrichtung Folgendes umfasst:
- eine Bodenwand (52), die zum Tragen eines Stapels von Platten ausgelegt ist,
- mindestens einen Führungskörper, wobei der Führungskörper bewegbar mit der Bodenwand verbunden ist und dazu ausgelegt ist, an dem Stapel von Platten anzuliegen,
- ein Führungskörperantriebssystem, das mit dem mindestens einen Führungskörper verbunden ist und mindestens einen Aktuator umfasst, der dazu ausgelegt ist, den mindestens einen Führungskörper zu bewegen, wobei das Führungskörperantriebssystem dazu ausgelegt ist, den
mindestens einen Führungskörper zu bewegen, um den Plattenstapel um einen Winkel in Bezug auf eine neutrale Position zu schwenken, wobei die Bewegung des mindestens einen Führungskörpers die Platten des Plattenstapels schwenkt, wobei die Platten in Bezug aufeinander geschert werden, wobei sich die Plattenlockerungsvorrichtung am Eingang oder am Ausgang des mindestens einen Förderers befindet.

5. Stapelmanipulationssystem nach einem der vorhergehenden Ansprüche, wobei die sich bewegende Anordnung einen Roboterarm (22) umfasst und der Förderer keinen Roboterarm umfasst; und/oder
wobei die sich bewegende Anordnung einen Kran umfasst; und/oder
wobei die Führungsstruktur eine oder mehrere Schienen oder ein Förderband umfasst; und/oder
wobei die sich bewegende Anordnung und/oder der Förderer mindestens einen Rotationsmanipulator umfasst, der mindestens einen Rotationsfreiheitsgrad für den Plattenstapel bereitstellt, wobei der mindestens eine Rotationsmanipulator drehbar ist, um die Ausrichtung eines Plattenstapels zwischen dem Ankunftsort und dem Zielort zu ändern.

6. Stapelmanipulationssystem nach einem der vorhergehenden Ansprüche, ferner umfassend einen Stützkörper (60) und einen Stapel von Platten, die sich am Ankunftsort befinden, wobei der Stützkörper mehrere Längs- und Seitenschlitze (62) in einer oberen Oberfläche definiert, um den bewegbaren Manipulator aufzunehmen, wodurch dem Manipulator ermöglicht wird, unter einen Stapel zu greifen, der an dem Körper positioniert ist, wobei die Breite der Schlitze größer als die Breite des bewegbaren Manipulators ist.

7. Stapelmanipulationssystem nach einem der vorhergehenden Ansprüche, wobei der Stützkörper mindestens eine Aussparung (64) in der oberen Oberfläche außer den Längs- und Seitenschlitzen umfasst und der bewegbare Manipulator mindestens ein Verlängerungselement (242) umfasst, wobei die Länge und Breite der mindestens einen Aussparung größer als die Länge und Breite des mindestens einen Verlängerungselements sind, wobei der bewegbare Manipulator dazu ausgelegt ist, mit dem Stützkörper mindestens durch die mindestens eine Aussparung in Eingriff zu kommen, um den Stützkörper von einer Ankunftsposition in eine Stützkörperaufbewahrungsposition (66) zu bewegen.

8. Stapelmanipulationssystem nach einem der vorhergehenden Ansprüche, wobei der mindestens eine Förderer einen Aufzug (44) umfasst und sich der Zwischenort an einem oberen Ende (422) oder an einem unteren Ende (424) der Führungsstruktur befindet und sich der Zielort an einem gegenüberliegenden Ende der Führungsstruktur befindet, wobei sich der Aufzug entlang der Führungsstruktur bewegt.

9. Stapelmanipulationssystem nach einem der vorhergehenden Ansprüche, wobei der Aufzug durch ein Aufzugssystem angetrieben wird, um die Platten eines Stapels durch Beschleunigen und/oder Abbremsen des Stapels von Platten gegen eine feste Struktur zu trennen, wobei insbesondere das Aufzugssystem dazu ausgelegt ist, die Platten eines Stapels zu trennen, indem der Stapel frei auf eine Bodenwand fallen gelassen wird.

10. Stapelmanipulationssystem nach einem der vorhergehenden Ansprüche, wobei der mindestens eine Förderer mindestens einen Aktuator (46) und mindestens einen Zwischenkörper (48) umfasst, wobei der mindestens eine Aktuator und der mindestens eine Zwischenkörper dazu ausgelegt sind, einen Stapel von Platten von dem mindestens einen Zwischenort in den mindestens einen Förderer zu bewegen und/oder den Stapel von Platten aus dem mindestens einen Förderer zu bewegen.

11. Stapelmanipulationssystem nach einem der vorhergehenden Ansprüche, wobei die Trennung einen Schutzzaun mit Überhang (32) umfasst, wobei der Schutzzaun mit Überhang einen Bereich unterhalb des Überhangs in der zweiten Zone erzeugt, um den Bediener aufzunehmen, wobei die sich bewegende Anordnung und der Förderer dazu ausgelegt sind, den Stapel von Platten über den Schutzzaun zu bewegen.

12. Stapelmanipulationssystem nach einem der vorhergehenden Ansprüche, wobei die Trennung einen Boden eines Gebäudes umfasst, wobei sich die erste Zone auf dem Boden des Gebäudes befindet und sich die zweite Zone auf einem unteren Boden des Gebäudes befindet, oder wobei die Trennung einen Boden eines Gebäudes umfasst, wobei sich die zweite Zone auf dem Boden des Gebäudes befindet und sich die erste Zone auf einem unteren Boden des Gebäudes befindet.

13. Stapelmanipulationssystem nach einem der vorhergehenden Ansprüche, wobei die Maschine eine Batterieplattenanordnungsvorrichtung ist, wobei die Batterieplattenanordnungsvorrichtung mindestens einen ersten Zielort für einen Stapel von Batterieplatten einer ersten Art und einen zweiten Zielort für einen Stapel von Batterieplatten einer zweiten Art umfasst, wobei die Batterieplattenanordnungsvorrichtung eine erste Positionierungsanordnung und eine zweite Positionierungsanordnung umfasst, die alternativ Batterieplatten der ersten Art und der zweiten Art hintereinander positionieren, wodurch ein Stapel von alternierenden Batterieplatten der ersten Art und Platten der zweiten Art erzeugt wird, wobei die Maschine einen Förderer umfasst, der dazu ausgelegt ist, einen Stapel von alternierenden Batterieplatten aus der Maschine zu bewegen, nachdem er dazu angeordnet wurde, in einer Batterie installiert zu werden.

14. Verfahren zum Manipulieren eines Stapels von Platten (2), das dazu ausgelegt ist, einen Stapel von Platten, insbesondere Bleibatterieplatten, von mindestens einem Ankunftsort (16A, 16B) zu mindestens einem Zielort (17A, 17B, 17C) an einer Maschine zu bewegen, und wobei das Stapelmanipulationssystem Folgendes umfasst:
- eine erste Zone (12), die den mindestens einen Ankunftsort und eine sich bewegende Anordnung (20) und einen vollständigen Bewegungsbereich der sich bewegenden Anordnung umfasst,
- eine zweite Zone (14), die den mindestens einen Zielort und die Maschine umfasst, wobei die zweite Zone dazu ausgelegt ist, einen Bediener aufzunehmen,
- eine Trennung (30), die die erste Zone von der zweiten Zone trennt, wobei die Trennung dazu ausgelegt ist, den Bediener daran zu hindern, sich in die erste Zone zu bewegen,
- mindestens einen Förderer (40A, 40B, 40C), der sich durch oder über die Trennung erstreckt, wobei der mindestens eine Förderer einen Eingang (401) an mindestens einem Zwischenort (18A, 18B, 18C) und einen Ausgang (402), der sich an dem mindestens einen Zielort befindet, umfasst, wobei sich der Zwischenort in der ersten Zone befindet,
wobei der Förderer eine Trajektorie zwischen dem Eingang und dem Ausgang definiert und eine Führungsstruktur umfasst, die sich zwischen dem Eingang und dem Ausgang entlang der Trajektorie erstreckt und den Stapel von Platten entlang der Trajektorie führt, und wobei,
zumindest in der zweiten Zone, die Führungsstruktur eine statische Struktur ist, wobei das Verfahren die folgenden Schritte umfasst:
a) Ineingriffbringen des Stapels von Platten mit der sich bewegenden Anordnung in dem mindestens einen Ankunftsort in der ersten Zone,
b) Bewegen des Stapels von Platten von dem mindestens einen Ankunftsort zu dem mindestens einen Zwischenort in der ersten Zone mit der sich bewegenden Anordnung,
c) Bewegen des Stapels von Platten von dem mindestens einen Zwischenort zu dem mindestens einen Zielort in der zweiten Zone mit dem mindestens einen Förderer,
wobei die sich bewegende Anordnung sich bewegende Teile umfasst und wobei die sich bewegenden Teile außerhalb der zweiten Zone bleiben.

15. Verfahren zum Manipulieren eines Stapels von Platten nach dem vorhergehenden Anspruch, wobei die sich bewegende Anordnung einen bewegbaren Manipulator (24) umfasst, wobei der bewegbare Manipulator ein Eingriffselement umfasst, das während Schritt a) mit dem Stapel von Platten in dem mindestens einen Ankunftsort in Eingriff kommt, und wobei während Schritt b) die sich bewegende Anordnung den Stapel von Platten von dem mindestens einen Ankunftsort zu dem mindestens einen Zwischenort bewegt.

16. Verfahren zum Manipulieren eines Plattenstapels nach Anspruch 14 oder 15, wobei sich der mindestens eine Zwischenort in einem ersten vertikalen Abstand von dem mindestens einen Ankunftsort und einem zweiten vertikalen Abstand von dem mindestens einen Zielort befindet, wobei während Schritt b) die sich bewegende Anordnung einen Stapel von Platten über den ersten vertikalen Abstand zu dem mindestens einen Zwischenort bewegt, und wobei während Schritt c) der mindestens eine Förderer den Stapel von Platten über den zweiten vertikalen Abstand zu dem mindestens einen Zielort bewegt, wobei die sich bewegende Anordnung und der mindestens eine Förderer zusammenarbeiten, um den Stapel von Platten an der Trennung vorbei und in Richtung der Maschine zu bewegen.

17. Verfahren zum Manipulieren eines Stapels von Platten nach einem der Ansprüche 14 bis 16,
wobei das Stapelmanipulationssystem mindestens eine Plattenlockerungsvorrichtung umfasst, wobei die Plattenlockerungsvorrichtung die Platten eines Stapels voneinander löst, bevor sie an dem mindestens einen Zielort ankommen, wobei die mindestens eine Plattenlockerungsvorrichtung ein Führungskörperantriebssystem und mindestens einen Führungskörper umfasst.

18. Verfahren zum Manipulieren eines Stapels von Platten nach einem der Ansprüche 14 bis 17,
wobei die sich bewegende Anordnung einen Roboterarm umfasst und der Förderer keinen Roboterarm umfasst; und/oder
wobei die sich bewegende Anordnung und/oder der Förderer mindestens einen Rotationsmanipulator umfasst, der mindestens einen Rotationsfreiheitsgrad bereitstellt, wobei die sich bewegende Anordnung und/oder der Förderer die Ausrichtung eines Plattenstapels nach dem Eingriff mit dem Plattenstapel ändert; und/oder
wobei der mindestens eine Förderer einen Aufzug umfasst und sich der Zwischenort an einem unteren Ende der Führungsstruktur befindet und sich der Zielort an einem oberen Ende der Führungsstruktur befindet; und/oder
wobei die Trennung eine längliche Struktur ist, die eine sichere Seite in der zweiten Zone erzeugt, die dazu ausgelegt ist, einen Bediener aufzunehmen und den Bediener vor sich bewegenden Teilen geschützt zu halten, wobei die sichere Seite der zweiten Zone entspricht; und/oder
wobei die Maschine eine Batterieplattenanordnungsvorrichtung ist, wobei die Batterieplattenanordnungsvorrichtung mindestens einen ersten Zielort für einen Stapel von Platten einer ersten Art und einen zweiten Zielort für einen Stapel von Platten einer zweiten Art umfasst, wobei die Batterieplattenanordnungsvorrichtung eine erste Positionierungsanordnung und eine zweite Positionierungsanordnung umfasst, die abwechselnd Platten der ersten Art und der zweiten Art hintereinander positionieren, einen Stapel von alternierenden Platten der ersten Art und von Platten der zweiten Art erzeugend, wobei die Maschine einen Förderer umfasst, der den Stapel von alternierenden Platten aus der Maschine bewegt, nachdem er in einer Batterie installiert wurde.

## Revendications

1. Système de manipulation d'empilement (10) configuré pour déplacer un empilement de plaques (2), en particulier des plaques de batteries au plomb, d'au moins un emplacement d'arrivée (16A, 16B) à au moins un emplacement cible (17A, 17B, 17C) au niveau d'une machine (80) où les plaques doivent être traitées, le système de manipulation d'empilement comprenant :
- une première zone (12) comprenant l'au moins un emplacement d'arrivée et un ensemble mobile non statique (20) présentant une plage de mouvement, la plage de mouvement complète se trouvant au sein de la première zone,
- une seconde zone (14) comprenant l'au moins un emplacement cible et la machine,
- au moins un convoyeur (40A, 40B, 40C),
l'au moins un convoyeur comprenant une entrée (401) dans au moins un emplacement intermédiaire (18A, 18B, 18C) situé dans la première zone et une sortie (402) située dans la seconde zone,
le convoyeur définissant une trajectoire entre l'entrée et la sortie, et l'ensemble mobile comprenant des parties mobiles,
le système étant **caractérisé en ce que** la seconde zone est configurée pour recevoir un opérateur,
le système comprenant une séparation (30), séparant la seconde zone de la première zone, la séparation étant configurée pour empêcher l'opérateur de se déplacer dans la première zone,
l'au moins un convoyeur traversant la séparation,
le convoyeur comprenant une structure de guidage (42) qui s'étend entre l'entrée et la sortie le long de ladite trajectoire et qui guide l'empilement de plaques le long de ladite trajectoire, et, au moins dans la seconde zone, la structure de guidage étant une structure statique, et les parties mobiles étant configurées pour rester à l'extérieur de la seconde zone.

2. Système de manipulation d'empilement selon la revendication 1, l'ensemble mobile (20) comprenant un manipulateur mobile (24), le manipulateur mobile comprenant un élément de mise en prise qui est configuré pour venir en prise avec l'empilement de plaques dans l'au moins un emplacement d'arrivée, et le manipulateur mobile étant configuré pour déplacer l'empilement de plaques de l'au moins un emplacement d'arrivée à l'au moins un emplacement intermédiaire.

3. Système de manipulation d'empilement selon l'une quelconque des revendications précédentes, l'au moins un emplacement intermédiaire étant situé à une première distance verticale (102) de l'au moins un emplacement d'arrivée et à une seconde distance verticale (104) de l'au moins un emplacement cible, l'ensemble mobile étant configuré pour déplacer un empilement de plaques sur la première distance verticale jusqu'à l'au moins un emplacement intermédiaire, et l'au moins un convoyeur étant configuré pour déplacer l'empilement de plaques sur la seconde distance verticale jusqu'à l'au moins un emplacement cible, l'ensemble mobile et l'au moins un convoyeur travaillant ensemble pour déplacer l'empilement de plaques au-delà de la séparation et en direction de la machine.

4. Système de manipulation d'empilement selon l'une quelconque des revendications précédentes, comprenant au moins un dispositif de décollement de plaques (50), configuré pour décoller les plaques d'un empilement, l'au moins un dispositif de décollement de plaques comprenant :
- une paroi de fond (52) configurée pour supporter un empilement de plaques,
- au moins un corps de guidage, le corps de guidage étant relié de manière mobile à la paroi de fond, et étant configuré pour venir en butée contre l'empilement de plaques,
- un système d'entraînement de corps de guidage étant relié à l'au moins un corps de guidage et comprenant au moins un actionneur configuré pour déplacer l'au moins un corps de guidage,
le système d'entraînement de corps de guidage étant configuré pour déplacer l'au moins un corps de guidage afin de faire pivoter l'empilement de plaques d'un angle par rapport à une position neutre, le mouvement de l'au moins un corps de guidage faisant pivoter les plaques de l'empilement de plaques, en cisaillant les plaques les unes par rapport aux autres, le dispositif de décollement de plaques étant situé à l'entrée ou à la sortie de l'au moins un convoyeur.

5. Système de manipulation d'empilement selon l'une quelconque des revendications précédentes, l'ensemble mobile comprenant un bras de robot (22) et le convoyeur ne comprenant pas de bras de robot ; et/ou
l'ensemble mobile comprenant une grue ; et/ou
la structure de guidage comprenant un ou plusieurs rails ou une courroie de transport ; et/ou
l'ensemble mobile et/ou le convoyeur comprenant au moins un manipulateur rotatif qui fournit au moins un degré de liberté rotatif pour l'empilement de plaques, l'au moins un manipulateur rotatif pouvant tourner pour modifier l'orientation d'un empilement de plaques entre l'emplacement d'arrivée et l'emplacement cible.

6. Système de manipulation d'empilement selon l'une quelconque des revendications précédentes, comprenant en outre un corps de support (60) et un empilement de plaques situé à l'emplacement d'arrivée, le corps de support définissant une pluralité de fentes longitudinales et latérales (62) dans une surface supérieure pour recevoir le manipulateur mobile, permettant au manipulateur de passer sous un empilement qui est positionné sur le corps, la largeur des fentes étant plus grande que la largeur du manipulateur mobile.

7. Système de manipulation d'empilement selon l'une quelconque des revendications précédentes, le corps de support comprenant au moins un évidement (64) dans la surface supérieure autre que les fentes longitudinales et latérales et le manipulateur mobile comprenant au moins un élément d'extension (242), la longueur et la largeur de l'au moins un évidement étant plus grandes que la longueur et la largeur de l'au moins un élément d'extension, le manipulateur mobile étant configuré pour venir en prise avec le corps de support au moins à travers l'au moins un évidement afin de déplacer le corps de support d'une position d'arrivée à une position de stockage de corps de support (66).

8. Système de manipulation d'empilement selon l'une quelconque des revendications précédentes, l'au moins un convoyeur comprenant un élévateur (44) et l'emplacement intermédiaire étant situé à une extrémité supérieure (422) ou à une extrémité inférieure (424) de la structure de guidage et l'emplacement cible étant situé à une extrémité opposée de la structure de guidage, l'élévateur se déplaçant le long de la structure de guidage.

9. Système de manipulation d'empilement selon l'une quelconque des revendications précédentes, l'élévateur étant entraîné par un système d'élévateur pour séparer les plaques d'un empilement en accélérant et/ou en décélérant l'empilement de plaques contre une structure fixe, en particulier le système d'élévateur étant configuré pour séparer les plaques d'un empilement en laissant l'empilement tomber librement sur une paroi de fond.

10. Système de manipulation d'empilement selon l'une quelconque des revendications précédentes, l'au moins un convoyeur comprenant au moins un actionneur (46) et au moins un corps intermédiaire (48), l'au moins un actionneur et l'au moins un corps intermédiaire étant configurés pour déplacer un empilement de plaques depuis l'au moins un emplacement intermédiaire dans l'au moins un convoyeur et/ou pour déplacer l'empilement de plaques hors de l'au moins un convoyeur.

11. Système de manipulation d'empilement selon l'une quelconque des revendications précédentes, la séparation comprenant une barrière de protection avec porte-à-faux (32), la barrière de protection avec porte-à-faux créant un espace sous le porte-à-faux dans la seconde zone pour recevoir l'opérateur, l'ensemble mobile et le convoyeur étant configurés pour déplacer l'empilement de plaques par-dessus la barrière de protection.

12. Système de manipulation d'empilement selon l'une quelconque des revendications précédentes, la séparation comprenant un plancher d'un bâtiment, la première zone étant située sur le plancher du bâtiment et la seconde zone étant située sur un étage inférieur du bâtiment, ou la séparation comprenant un plancher d'un bâtiment, la seconde zone étant située sur le plancher du bâtiment et la première zone étant située sur un étage inférieur du bâtiment.

13. Système de manipulation d'empilement selon l'une quelconque des revendications précédentes, la machine étant un dispositif d'agencement de plaques de batterie, le dispositif d'agencement de plaques de batterie comprenant au moins un premier emplacement cible pour un empilement de plaques de batterie d'un premier type et un second emplacement cible pour un empilement de plaques de batterie d'un second type, le dispositif d'agencement de plaques de batterie comprenant un premier ensemble de positionnement et un second ensemble de positionnement qui positionnent en alternance des plaques de batterie du premier type et du second type les unes derrière les autres, créant un empilement de plaques de batterie alternées du premier type et de plaques du second type, la machine comprenant un convoyeur configuré pour déplacer un empilement de plaques de batterie alternées hors de la machine après avoir été agencé pour être installé dans une batterie.

14. Procédé de manipulation d'un empilement de plaques (2), configuré pour déplacer un empilement de plaques, en particulier des plaques de batteries au plomb, d'au moins un emplacement d'arrivée (16A, 16B) à au moins un emplacement cible (17A, 17B, 17C) au niveau d'une machine, et le système de manipulation d'empilement comprenant :
- une première zone (12) comprenant l'au moins un emplacement d'arrivée et un ensemble mobile (20) et une plage de mouvement complète de l'ensemble mobile,
- une seconde zone (14) comprenant l'au moins un emplacement cible et la machine, la seconde zone étant configurée pour recevoir un opérateur,
- une séparation (30), séparant la première zone de la seconde zone, la séparation étant configurée pour empêcher l'opérateur de se déplacer dans la première zone,
- au moins un convoyeur (40A, 40B, 40C) s'étendant à travers ou par-dessus la séparation, l'au moins un convoyeur comprenant une entrée (401) dans au moins un emplacement intermédiaire (18A, 18B, 18C) et une sortie (402) située au niveau de l'au moins un emplacement cible, l'emplacement intermédiaire étant situé dans la première zone,
le convoyeur définissant une trajectoire entre l'entrée et la sortie et comprenant une structure de guidage qui s'étend entre l'entrée et la sortie le long de ladite trajectoire et qui guide l'empilement de plaques le long de ladite trajectoire, et,
au moins dans la seconde zone, la structure de guidage étant une structure statique, le procédé comprenant les étapes suivantes :
a) la mise en prise de l'empilement de plaques avec l'ensemble mobile dans l'au moins un emplacement d'arrivée dans la première zone,
b) le déplacement de l'empilement de plaques de l'au moins un emplacement d'arrivée à l'au moins un emplacement intermédiaire dans la première zone au moyen de l'ensemble mobile,
c) le déplacement de l'empilement de plaques de l'au moins un emplacement intermédiaire à l'au moins un emplacement cible dans la seconde zone au moyen de l'au moins un convoyeur,
l'ensemble mobile comprenant des parties mobiles, et les parties mobiles restant à l'extérieur de la seconde zone.

15. Procédé de manipulation d'un empilement de plaques selon la revendication précédente, l'ensemble mobile comprenant un manipulateur mobile (24), le manipulateur mobile comprenant un élément de mise en prise qui, pendant l'étape a), vient en prise avec l'empilement de plaques dans l'au moins un emplacement d'arrivée, et, pendant l'étape b), l'ensemble mobile déplaçant l'empilement de plaques de l'au moins un emplacement d'arrivée à l'au moins un emplacement intermédiaire.

16. Procédé de manipulation d'un empilement de plaques selon la revendication 14 ou 15,
l'au moins un emplacement intermédiaire étant situé à une première distance verticale de l'au moins un emplacement d'arrivée et à une seconde distance verticale de l'au moins un emplacement cible, pendant l'étape b), l'ensemble mobile déplaçant un empilement de plaques sur la première distance verticale jusqu'à l'au moins un emplacement intermédiaire, et, pendant l'étape c), l'au moins un convoyeur déplaçant l'empilement de plaques sur la seconde distance verticale jusqu'à l'au moins un emplacement cible, l'ensemble mobile et l'au moins un convoyeur travaillant ensemble pour déplacer l'empilement de plaques au-delà de la séparation et en direction de la machine.

17. Procédé de manipulation d'un empilement de plaques selon l'une quelconque des revendications 14 à 16,
le système de manipulation d'empilement comprenant au moins un dispositif de décollement de plaques, le dispositif de décollement de plaques décollant les plaques d'un empilement les unes des autres avant d'arriver à l'au moins un emplacement cible, l'au moins un dispositif de décollement de plaques comprenant un système d'entraînement de corps de guidage et au moins un corps de guidage.

18. Procédé de manipulation d'un empilement de plaques selon l'une quelconque des revendications 14 à 17,
l'ensemble mobile comprenant un bras de robot et le convoyeur ne comprenant pas de bras de robot ; et/ou
l'ensemble mobile et/ou le convoyeur comprenant au moins un manipulateur rotatif qui fournit au moins un degré de liberté rotatif, l'ensemble mobile et/ou le convoyeur modifiant l'orientation d'un empilement de plaques après mise en prise avec l'empilement de plaques ; et/ou
l'au moins un convoyeur comprenant un élévateur et l'emplacement intermédiaire étant situé au niveau d'une extrémité inférieure de la structure de guidage et l'emplacement cible étant situé au niveau d'une extrémité supérieure de la structure de guidage ; et/ou
la séparation étant une structure allongée créant un côté sûr dans la seconde zone qui est configurée pour recevoir un opérateur et pour maintenir l'opérateur à l'abri des parties mobiles, le côté sûr correspondant à la seconde zone ; et/ou
la machine étant un dispositif d'agencement de plaques de batterie, le dispositif d'agencement de plaques de batterie comprenant au moins un premier emplacement cible pour un empilement de plaques d'un premier type et un second emplacement cible pour un empilement de plaques d'un second type, le dispositif d'agencement de plaques de batterie comprenant un premier ensemble de positionnement et un second ensemble de positionnement qui positionnent en alternance des plaques du premier type et du second type les unes derrière les autres, créant un empilement de plaques alternées du premier type et de plaques du second type, la machine comprenant un convoyeur qui déplace l'empilement de plaques alternées hors de la machine après avoir été agencé pour être installé dans une batterie.
